# EUROPEAN PATENT SPECIFICATION

(11) **EP 3 178 625 B1**
(45) Date of publication and mention of the grant of the patent: **12.12.2018**
(21) Application number: 16165145.0
(22) Date of filing: 13.04.2016
(51) Int. Cl.: B29C 45/14, B25J 15/00, B29C 70/54

(54) **MANIPULATING TOOL FOR PRODUCING REINFORCED PLASTIC MATERIAL PART**
BEDIENUNGSWERKZEUG ZUR HERSTELLUNG VON VERSTÄRKTEN KUNSTSTOFFMATERIALTEILEN
OUTIL MANIPULATUEUR POUR PRODUIRE UNE PIÈCE EN MATÉRIAU PLASTIQUE RENFORCÉE

(30) Priority: 08.12.2015 US 201514962490
(43) Date of publication of application: 14.06.2017
(73) Proprietor: Flex-N-Gate France, 25405 Audincourt (FR); Faurecia Exteriors GmbH, 31655 Stadthagen (DE)
(72) Inventor: MENARD, Magalie, 90200 Auxelles-Haut (FR); COMPAGNON, Philippe, 25700 Valentigney (FR); MORESSEE, Aurélien, 91781 Weissenburg in Bayern (DE); RICHARD, Frédéric, 49420 Pouancé (FR)
(74) Representative: Lavoix

(56) References cited:
- EP-A1- 1 044 790
- WO-A1-03/035375
- DE-A1-102011 050 102
- DE-A1-102011 056 029
- DE-A1-102014 209 904
- DE-A1-102015 107 394

## Description

The invention relates to a manipulating tool for producing a reinforced plastic material part, comprising at least a reinforcing element made of at least one fibrous insert made of a composite material, according to the preamble of claim 1.

Such a tool is known from EP1044790. Other tools are known from DE102014209904A1, DE102011 056029 A1 and DE 102011050102 A1.

Methods for producing a reinforced plastic material part are well-known for example for producing inner or outer trim parts for automotive vehicles. The use of a reinforcing element made of composite material allows reducing the amount of plastic material required to produce a part while maintaining satisfactory mechanical properties, such as rigidity. Consequently, the plastic material parts can be made lighter and thinner while preserving the features required to fulfill their functions.

Inserts are generally first shaped in a particular mold defining the shape of the reinforcement element to be produced, and are then transported, in the shape of the reinforcement element, to the injection mold where they are held in position before the injection of the plastic material. However, this solution requires two molds, one for shaping the reinforcement element and one for shaping the final plastic material part, particular means arranged for retrieving the reinforcement part from the first mold and for moving it and placing it in the second mold, and a large number of production steps, which makes the method time consuming and costly.

Another solution is to secure the inserts on a first part of the injection mold before they are shaped and to shape the inserts into reinforcing parts by closing the mold a first time onto the inserts and then to move the mold such that it defines the injection cavity wherein the plastic material can then be injected.

While this method is less time consuming and requires a fewer production steps, it remains unsatisfactory in terms of throughput.

Furthermore, when the inserts are shaped into reinforcing parts, the inserts touch both the first part and the second part of the injection mold and the first part and the second part are in contact with each other around the inserts. As a result, both parts of the injection mold can be altered after a number of production cycles, which is particularly negative for the second part of the mold which can be grained and provide an aesthetic surface to the final part.

In many industries, such as the car industry, some reinforced plastic material parts are used on the outside of cars and are therefore visible from the outside. When both of the parts of the injection mold are altered, the produced plastic material part is flawed on both the inside and the visible sides. Therefore the plastic material part can be rejected to fit the aesthetic standards although it is flawless in terms of mechanical characteristics.

One of the aims of the invention is to propose a manipulating tool for easily producing a reinforced plastic material part that fits the technical and aesthetic standards.

According to the invention, these objects are achieved by the previous manipulating tool, characterized in that the manipulating tool comprises a gripping area arranged on a second face orthogonal to a first face on which the shaping area is arranged, the gripping area being adapted to maintain at least one insert.

The manipulating tool can be used with a first part of a mold to shape the reinforcing element and allows having a single mold to produce the plastic material part, reduces the time required to perform the method and protects a second part of the mold, which does not have to come into contact with the reinforcement element.

According to preferred embodiments, the inventive manipulating tool includes one, several or all of the following features, in all technically possible combinations:
- the mobile independent elements are equipped with contact elements intended to be applied against the insert,
- the contact elements are adapted to move in rotation with the mobile independent elements,
- the contact elements are rolls, counterforms and/or pressure elements,
- the contact elements comprises counterforms, the counterforms being a grid,
- the mobile independent elements are adapted to move in translation perpendicularly to a first face on which the shaping area is arranged, such that the distance between a free end of the mobile independent elements and the first face can be varied,
- the mobile independent elements are adapted to move in rotation with the first face, such that the orientation between a free end of the mobile independent elements and the first face can be varied,
- the manipulating tool comprises grippers adapted to maintain an insert on the shaping area,
- the manipulating tool comprises a mold reference, the mold reference being a protruding part adapted to fit with a corresponding print on a mold, such that the manipulating tool is adapted to be precisely positioned in regard to the mold,
- the manipulating tool comprises an ejection unit adapted to push the reinforcing element outside the shaping area,
- the manipulating tool comprises a heating device for maintaining the temperature of the shaping area and of the fibrous insert and/or heating the shaping area and the fibrous insert.

The invention also related to an assembly comprising a manipulating tool as defined above and a first part of an injection mold, the manipulating tool being adapted to apply the shaping area against an inner wall of the first part, the inner wall having the shape of a side of the plastic material part to be produced.

According to preferred embodiments, the inventive manipulating tool includes one, several or all of the following features, in all technically possible combinations:
- each mobile independent element is adapted to move in translation perpendicularly to a first face on which the shaping area is arranged, such that the shaping area is substantially complementary to the inner wall of the first part and that the distance between a free end of the mobile independent elements and the first face can be varied, the mobile independent elements being adapted to press the reinforcing element against the inner wall of the first part,
- the mobile independent elements are equipped with contact elements, the contact elements being free in rotation so as to adapt their orientation to the inner wall against which they are pressed.

The invention also related to a method for producing a plastic material part, comprising at least a reinforcing element made of at least one fibrous insert made of a composite material, using an injection mold comprising a first part and a second part defining between them a molding cavity having the shape of the plastic material part to be produced, said method comprising the steps of:
- transporting and placing the reinforcing element onto the first part of the injection mold using a manipulating tool,
- shaping the fibrous insert into the reinforcing element,
- injecting a plastic material into the mold such that the reinforcing element is overmolded by the plastic material and the plastic material part is produced,
wherein the manipulating tool comprises at least one shaping area arranged to receive and hold the fibrous insert, the shaping area comprising a forming system made of mobile independent elements, the forming system being able to impart the shape of one side of the reinforcing element to the fibrous insert,
the fibrous insert being placed in said shaping area during the transportation of the fibrous insert to the first part of the mold and being shaped into the reinforcing element by said shaping area and said first part of the mold when said insert is transported or/and is placed onto the first part of the injection mold.

According to a preferred embodiment, the method comprises a step of moving the mobile independent elements relative to each other to define the shape of the shaping area.

Other aspects and advantages of the invention will appear upon reading the following description, given by way of example and made in reference to the appended drawings, wherein:
- figure 1 is a sectional view of a plastic material part to be produced;
- figure 2 is a sectional view of a mold used for the production of the plastic material part of figure 1;
- figure 3 is a perspective view of a manipulating tool of the invention,
- figure 4 is a cross sectional view of the manipulating tool with a fibrous insert;
- figure 5 is a cross sectional view of the manipulating tool applying the fibrous insert on a first part of a mold;
- figure 6 is a cross sectional view of the closed mold with the fibrous insert; and
- figure 7 is a cross sectional view of the mold while plastic material is injected.

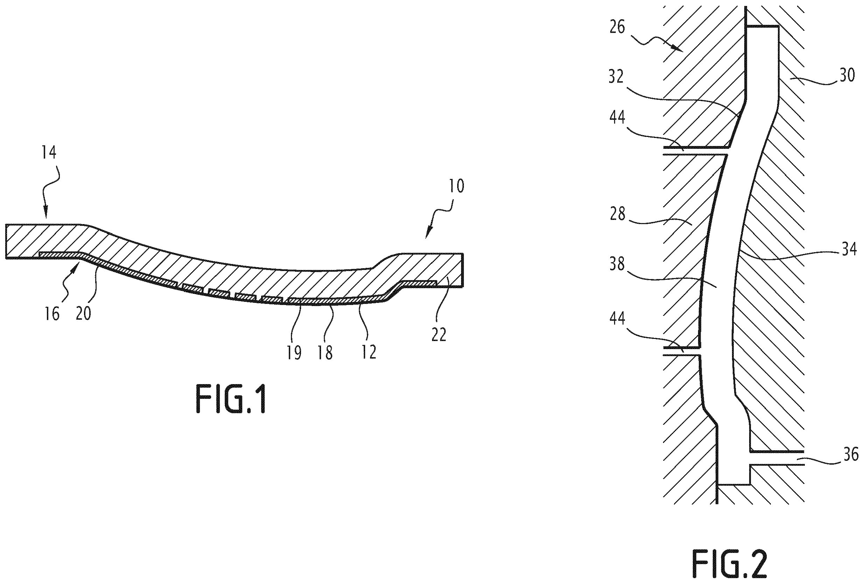

An example of a reinforced plastic material part produced using the manipulating tool of the invention is shown in Figure 1.

This plastic material part 10 comprises at least one reinforcing element 12 overmolded by a plastic body 14.

The reinforcing element 12 presents a three-dimensional shape such as, for example, a bowl like shape or a U-section/parabolic section and forming a recess 16. The reinforcing element 12 comprises an inner face 18 extending on the side of the recess and an outer face 19 opposite the inner face. The shape of the reinforcement element 12 mainly depends on the plastic material part 10 (design, etc.) to be produced and to the mechanical properties required in particular areas of the plastic material part 10. The reinforcement element 12 is used to improve the mechanical strength of the plastic material part 10 and to increase its rigidity, such that the plastic material part 10 can sustain predetermined loads.

The reinforcing element 12 is made out of at least one fibrous insert 20 which is blended with a plastic material matrix. The fibrous insert 20 for example comprises a fabric or fabrics of composite material comprising unidirectional and continuous fibers or continuous glass fiber weaved together along one direction or along two perpendicular directions or non-woven fiber mats. The plastic material of the matrix is for example polypropylene or polyamide.

The fibers can also be glass fibers or carbon fibers or other kind of fibers. The fibers can be pre-impregnated or not.

The plastic body 14 comprises a main portion 22 forming the main surface of the plastic material part 10 and which covers the outer side 19 of the reinforcing element 12. According to the embodiment shown in Fig. 1, the main portion 22 is more extended than the reinforcing element 12, meaning the reinforcing element 12 extends on a particular area of the main portion 22 only and not on the whole main portion 22. According to various embodiments, the reinforcing element 12 can extend on a more or less extended area of the main portion 22 and even on the whole surface of the main portion 22. According to other embodiments, several reinforcing elements 12 can be provided, said reinforcing elements 12 being distributed in particular areas of the plastic material part 10 and being spaced from each other or being linked together.

The plastic body 14 covers completely the outer side 19 of the reinforcing element 12.

The thickness of the main portion 22 can be constant, and the part 10 has a greater thickness opposite the reinforcing element 12. Alternatively the main portion 22 can also be thinner or thicker opposite the reinforcing element 12. More particularly, the thickness of the main portion 22 opposite the reinforcing element 12 can be arranged such that the part 10 has a constant thickness.

According to an embodiment, the thickness of the main portion 22 is smaller when it is not opposite the reinforcing element 12, which can be advantageous as explained subsequently.

According to the embodiment, the plastic body 14 further comprises at least one rib (not shown) extending from the inner face 18 of the reinforcing element 12. The rib can be part of a rib network formed on the inner face 18 of the reinforcing element 12 and possibly on the inner face of the main portion 22. Alternatively, as depicted in figure 1, no rib is provided on the inner face 18 of the reinforcement element 12.

Figure 2 represents the injection mold 26 used with the manipulating tool of the invention to produce a plastic material part 10 comprising a bowl-like shaped reinforcing element 12 and a main portion 22.

The mold comprises a first part 28 and a second part 30, both comprising an inner wall 32, 34.

The first part 28 and/or the second part 30 of the mold 26 comprise an inlet 36 for plastic material.

The first part 28 of the mold 26 can comprise at least one suction channel 44, such that the suction channel 44 is opposite the reinforcement element 12, which can be used to maintain and to plate the reinforcing element 12 against the first part 28 of the mold 26 and/or to draw plastic material in a specific location.

Classically, the first part 28 and the second part 30 are movable relative to each other between two positions of the mold 26: open and closed.

When the mold 26 is open, the inner wall 32 of the first part 28 of the mold 26 and the inner wall 34 of the second part 30 of the mold 26 are spaced apart from each other such that the inner wall 32 of the first part 28 and the inner wall 34 of the second part 30 are accessible for placing or retrieving elements in or from the mold 26.

When the mold 26 is closed, as shown in figure 2, the inner wall 32 of the first part 28 and the inner wall 34 of the second part 30 are brought close, such that the first part 28 and the second part 30 of the mold 26 define together a hermetically closed injection cavity 38. The cavity 38 has the shape of the plastic material part 10 to be produced. Consequently, the inner wall 32 of the first part 28 has the shape of the inner face of the plastic material part 10 and the inner wall 34 of the second part 30 has the shape of the outer of the plastic material part 10.

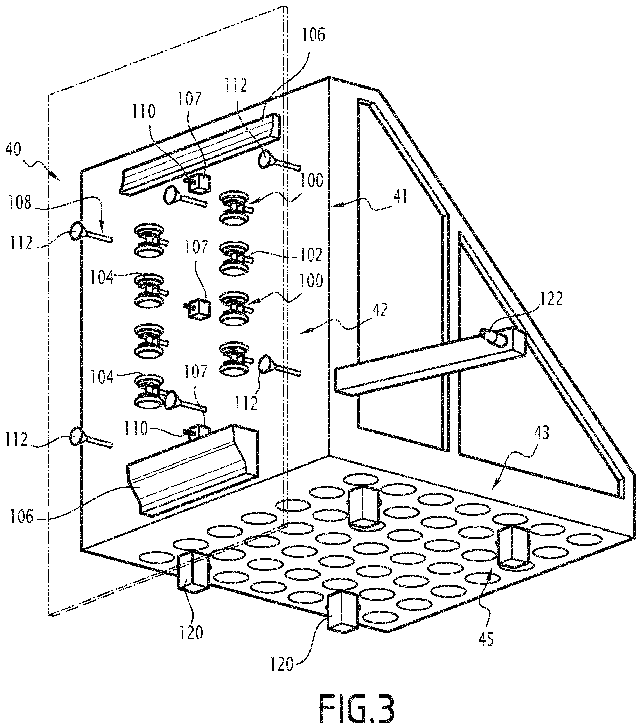

The manipulating tool 40 of the invention shown in figure 3 will now be described.

The manipulating tool 40 is arranged to be able to pick up one or several fibrous inserts 20 and to hold them during a displacement of the manipulating tool 40.

The manipulating tool comprises a first face 41 and a second face 43 orthogonal to the first face 41.

The manipulating tool comprises at least one shaping area 42. The shaping area is, for example, arranged on the first face 41.

Additionally, the manipulating tool comprises a gripping area 45 arranged on the second face 43.

The shaping area is adapted to have generally the shape of the outer side 19 of the reinforcing element 12 of the part 10 to be produced.

The shaping area 42 comprises a forming system 100.

The forming system 100 is adapted to shape the fibrous insert(s) 20 into the reinforcing element 12 and place the reinforcing element 20 onto the first part 28 of the mold 26.

The forming system 100 is made of mobile independent elements 102. The mobile independent elements 102 are equipped with contact elements, for example rolls 104, counterforms 106 and/or pressure elements 107.

The rolls 104 are particularly adapted to shape side surfaces of the reinforcing element 12.

Each counterform 106 has the shape of a particular area of the reinforcing element 12.The counterforms 106 are particularly adapted to shape deep surfaces and/or faces having a particular 3-dimensional shape, such as corners.

The counterforms may be formed of a grid instead of a continuous surface to limit the contact between fibrous inserts 20 and the shaping area 42 and consequently the cooling rate of the fibrous inserts 20 if heated.

The pressure elements 107 are adapted to apply pressure against a surface of the fibrous insert to modify the shape of this surface, for example, a flat surface. The pressure elements 107 are generally cuboid. The pressure elements 107 are particularly adapted to shape a central surface of the reinforcing element 12.

The mobile independent elements 102 are adapted to move in translation perpendicularly to the first face 41 such that the distance between the free end of the elements and the first face can be varied. The free end carries the part intended to locally modify the shape of the fibrous insert. They are independently moved by actuators, for example, hydraulic, pneumatic or electrical actuators.

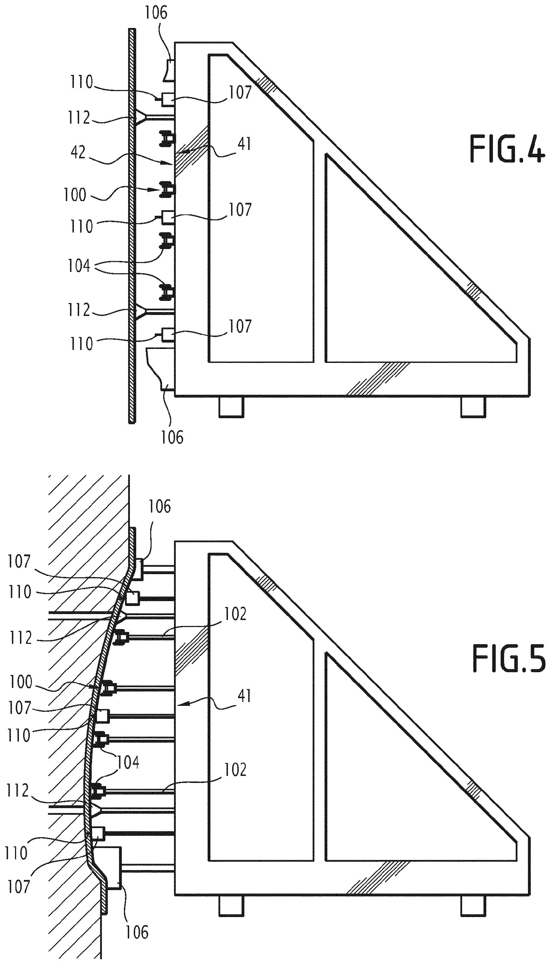

Each mobile independent element 102 can, for example, be moved independently from the others between a rest position, shown in figure 4, and at least one forming position. In the forming position, shown in figure 5, the mobile independent elements 102 are at a distance to the first face 41 such as to form the desired shape.

Additionally, the contact elements are advantageously able to move in rotation with the mobile independent elements 102.

The contact elements are, for example, free in rotation so as to adapt their orientation to the surface against which they are pressed, for example, the first part of the mold.

Additionally, the mobile independent elements 102 are adapted to move in rotation with the first face 41 such that the orientation between a free end of the mobile independent elements 102 and the first face can be varied.

The forming system 100 is thus able to take the desired shape forming the shaping area 42 by adapting the position of each element 102 relative to the first face.

Alternatively or additionally, the forming system 100 comprises a counterform of the wanted reinforcing element 12.

The manipulating tool further comprises grippers 108 adapted to maintain an insert on the shaping area 42.

The grippers are at least located in the middle and on the outline of the shaping area, where the inserts are adapted to be maintained, so as to avoid free-hanging and/or deforming during transport.

The grippers 108 are advantageously covered with polytetrafluoroethylene, silicones or other insulating materials, so that inserts do not stay attached to the grippers.

The grippers 108 are for example needle grippers 110 and/or vacuum grippers 112.

Each needle gripper 110 comprises at least one needle adapted to hook a part of an insert. In the depicted embodiment, the needles grippers 110 are the pressure elements 107 provided with at least one needle.

Each vacuum gripper 112 is linked to a vacuum source, such as to maintain the insert by suction.

Additionally, according to an embodiment, the manipulating tool 40 comprises spacing devices adapted to ensure a correct distance between the inserts and specific surfaces of the manipulating tool.

In one embodiment, the manipulating tool 40 is equipped with a heating device for heating and/or maintaining the temperature of the shaping area 42 and what is on the shaping area 42, i.e the fibrous insert(s). Alternatively, the manipulating tool 40 in itself is arranged to be able to heat the shaping area 42 and what is on the shaping area 42.

The heating device comprises, for example, infrared heaters, hot air heaters and/or lamps.

Additionally, according to an embodiment, the manipulating tool 40 comprises an ejection unit, for example in the form of at least one pin (not shown) arranged to push the reinforcing element 12 out of the shaping area 42. Additionally or alternatively, the ejection unit comprises a blowing device, the blowing device being for example the vacuum grippers adapted to reverse such that air is blown out of the vacuum grippers and the reinforcing element 12 is pushed out by the pressure of the air.

The gripping area 45 is adapted to maintain at least one insert near the second face 43 of the manipulating tool.

The gripping area 45 comprises grippers 120, for example, needle grippers and/or vacuum grippers.

The grippers 120 are advantageously covered with polytetrafluoroethylene, silicones or other insulating materials, so that inserts do not stay attached to the grippers.

The manipulating tool advantageously further comprises a mold reference 122.

The mold reference 122 is a protruding part, for example a pin. The mold reference is located outside the shaping area but substantially in the same plane. It is adapted to fit with a corresponding print (not shown) on the first part of the mold, such that the manipulating tool 40 is adapted to be precisely positioned in regard to the mold.

A method for producing the reinforced plastic material part 10 shown in Figure 1 using the manipulating tool 40 will now be described.

Firstly, one or several fibrous inserts 20 are placed in an oven, for example using the gripping area 45 of the manipulating tool 40. The inserts are placed relative to one another as they will be in the reinforced plastic material part 10 to be produced. The gripping area 45 is adapted to stack inserts on one another or with overlapping areas between the different inserts.

The fibrous insert(s) are heated, for example with hot air or infra-red, in order to allow their forming. The fibrous inserts 20 are then malleable, but not liquid.

According to another embodiment, the insert 20 is not heated but is naturally malleable and does not need to be heated.

In one embodiment, the fibrous inserts 20 are cut out before or after the step of heating. There is then no need to cut them out again. Consequently, once the plastic material part is finished, there is no need of a finishing step outside of the mold. The final part can therefore be obtained directly in the mold.

The shaping area 42 can be placed in the oven to allow to heat simultaneously as the fibrous insert 20 and the shaping area 42 and consequently limit the fibrous inserts 20 cooling rate by contact with the shaping area 42 during the transfer up to the injection mold 26.

Then, as depicted on figure 4, the inserts 20 are transported from the oven to the mold 26 by the manipulating tool 40. The inserts are maintained on the shaping area 42 of the manipulating tool 40 by the grippers 108.

The shape of the shaping area is defined by adapting the position of elements 102 such that an insert resting against the elements will acquire the wanted shape.

The shaping area 42 takes the shape of the outer side 19 of the reinforcing element 12 of the part 10 to be produced. The contact elements move in translation perpendicularly to the first face 41, the first face 41 being generally parallel to the first part 28, and in rotation with the mobile independent elements 12 such that the shaping area 42 takes the desired shape.

In an alternative embodiment, a transfer tool, different from the manipulating tool 40, is used to pick up the inserts from the oven or from their storing area, for example by vacuum sucking or by needle gripping. Then the transfer tool positions the fibrous inserts 20 onto the shaping area 42 of the manipulating tool 40 before or at the end of the step of heating.

Thanks to their malleable state, the fibrous inserts 20 take the shape of the shaping area 42 during the movement of the manipulating tool 40 between the oven and the mold 26.

The fibrous inserts 20 are, for example, pre-shaped by the shaping area 42 in a desired intermediate shape.

Alternatively, the fibrous inserts 20 are shaped to their definitive shape during the movement of the manipulating tool 40 to the mold.

As represented on figure 5, the fibrous inserts 20 are placed by the manipulating tool 40 onto the injection mold 26, which is open.

More particularly, the manipulating tool 40 places the shaping area 42 onto the inner wall 32 of the first part 28 of the injection mold 26 in an area of said inner wall 32 corresponding to the place of the reinforcement element 12 in the plastic material part 10.

When the manipulating tool 40 applies the shaping area 42 against the inner wall 32 of the first part 28 of the mold 26, the reinforcing element 12 is pressed between the shaping area 42 and the inner wall 32 of the first part 28.

The fibrous inserts 20 are thus shaped by the forming system with needles, rolls, counterforms and/or vacuum into the reinforcing element 12.

Consequently, the reinforcing element 12 acquires its wanted three-dimensional shape.

After the reinforcing element 12 is shaped, the ejection unit of the manipulating tool 400 ejects the reinforcing element 12 from the manipulating tool 40, such that the reinforcing element 12 stays on the first part 28 of the mold 26.

The manipulating tool 40 moves away from the mold 26, such that the mold 26 can be closed.

The reinforcing element 12 can then be secured on the first part of the mold, for example with needles 48 passing through the reinforcement element 12 and/or by applying a vacuum between the inner face 32 of the first part of the mold 28 and the inner face 18 of the reinforcement element 12, thanks to the suction channel 44, and/or by sliders which clamp the reinforced elements. Needles, vacuum and sliders allow to secure the reinforcing element 12 on the inner wall 32 of the first part 28 and to avoid any contact with the second part 30 of the mold 26 during the plastic injection.

The sliders have surfaces. At least one surface may present roughness, reliefs such as stripes and/or undercut geometry such that the grip of the reinforcing element 12 by the sliders is increased.

According to other embodiments, the reinforcing element 12 is secured on the first part 28 of the mold 26 while it is shaped, during the plastic injection.

According to other embodiments, the reinforcing element 12 is secured on the first part 28 of the mold 26 when the manipulating tool 40 ejects the reinforcing element 12. Particularly, the needles are extended along axes, which are different from the ejection axis, to ensure that the reinforcing element 12 is maintained on the first part 28 of the mold 26 and cannot escape from the needles.

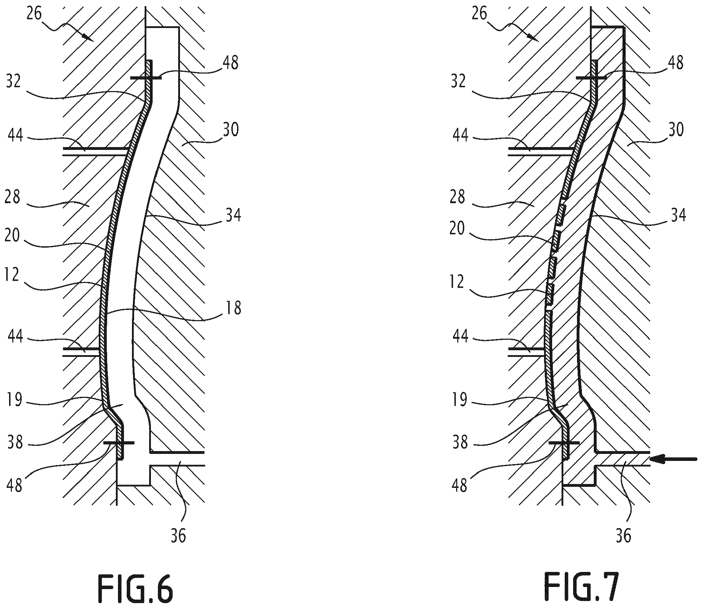

As shown on figure 6, the mold 26 is then closed. The reinforcing element 12 does not touch the second part 30 of the mold 26, but only the first part 28. The reinforcing element 12 extends inside the cavity 38 between the first part 28 and the second part 30 of the mold 26.

A pre-heated plastic material is injected into the cavity 38 through the inlet 36 as depicted on figure 7.

The inlet 36 is for example placed in the second part 30 of the mold 26 such that the plastic material is injected on the outer side of the plastic material part 10. This makes it possible to press by plastic flow the reinforcing element 12 on the first part 28 of the mold 26. In this case, the inlet 36 is placed on a spot of the material part 10, which will not be visible in the finished part, to avoid any visible mark due to the injection point. Alternatively, the inlet 36 is placed on a visible area of the material part 10 and produces a gating, which is then sheared or covered with a decorative part.

It should be noted that the reinforcing element 12 is porous due to the nature of its material such that the injected plastic material can flow through the reinforcing element 12. If the porosity of the reinforcing element 12 is not sufficient, apertures through the reinforcing element 12 can be provided to allow the plastic material to flow from one side of the reinforcement element 12 to the other side.

Another solution in order to produce a part with a plastic rib is to inject separately the plastic rib after or during the injection of the main portion 22.

The cavity 38 is filled and the plastic material forms the plastic body 14. The temperature of the plastic material is also sufficient enough for the plastic material to spread through the reinforcing element 12 and fill the empty spaces of the reinforcing element 12. The plastic material therefore blends with the composite material of the reinforcing element 12 and fills the whole cavity 38.

If a plurality of overlapping inserts 20 is used to form one reinforcing element 12, the inserts 20 are bound together during this step of overmolding.

When the thickness of the main portion 22 is smaller where it is not opposite the reinforcing element 12, the local thickness reduction acts as an obstacle to the plastic material flow. The plastic material flows preferably along the reinforcing element 12, ensuring the quality of the overmolding over the reinforcing element 12.

Lastly the mold 26 is then opened and the needles 48 are removed to retrieve the reinforced plastic material part 10 from the mold 26. The needles 48 can be retracted before the complete filling to avoid visible marks on the outer side of the plastic material part.

The obtained plastic material part 10 has satisfactory mechanical and aesthetic properties while being light and thin, thanks to the reinforcement element 12. Furthermore, the bounding between the reinforcement element 12 and the plastic material body 14 is particularly robust, thanks to the blending between the plastic material of the plastic body 14 and the plastic material of the matrix of the reinforcement element 12.

The method described above presents a short cycle thanks to the manipulating tool 40. Furthermore, the reinforcing element 12 is shaped as desired. Furthermore, the method requires only a single mold 26, which makes it less costly and less space consuming.

The manipulating tool 40 can be used for producing parts comprising reinforcing elements having different shapes. The manipulating tool 40 is indeed adapted to adapt the shape of the shaping area to the first part of the mold and to the shape to be produced thanks to the mobile independent elements.

## Claims

1. Manipulating tool (40) for producing a plastic material part comprising at least a reinforcing element (12) made of at least one fibrous insert (20) made of a composite material, the manipulating tool comprising a shaping area (42) arranged to receive and hold the fibrous insert, the shaping area comprising a forming system (100) made of mobile independent elements (102), the forming system (100) being able to impart the shape of one side of the reinforcing element to the fibrous insert,
**characterized in that** the manipulating tool comprises a gripping area (45) arranged on a second face (43) orthogonal to a first face (41) on which the shaping area (42) is arranged, the gripping area (45) being adapted to maintain at least one insert (20).

2. Manipulating tool according to claim 1, wherein the mobile independent elements (102) are equipped with contact elements (104, 106, 107) intended to be applied against the insert.

3. Manipulating tool according to claim 2, wherein the contact elements (104, 106, 107) are adapted to move in rotation with the mobile independent elements (102).

4. Manipulating tool according to claim 2 or 3, wherein the contact elements (104, 106, 107) are rolls (104), counterforms (106) and/or pressure elements (107).

5. Manipulating tool according to claim 2 or 3, wherein the contact elements (104, 106, 107) comprises counterforms (106), the counterforms (106) being a grid.

6. Manipulating tool according to any of claims 1 to 5, wherein the mobile independent elements (102) are adapted to move in translation perpendicularly to a first face (41) on which the shaping area is arranged, such that the distance between a free end of the mobile independent elements (102) and the first face (41) can be varied.

7. Manipulating tool according to any of claims 1 to 6, wherein the mobile independent elements (102) are adapted to move in rotation with the first face (41), such that the orientation between a free end of the mobile independent elements (102) and the first face (41) can be varied.

8. Manipulating tool according to any of claims 1 to 7, comprising grippers (108) adapted to maintain an insert on the shaping area (42).

9. Manipulating tool according to any of claims 1 to 8, comprising a mold reference (122), the mold reference (122) being a protruding part adapted to fit with a corresponding print on a mold, such that the manipulating tool (40) is adapted to be precisely positioned in regard to the mold.

10. Manipulating tool according to any of claims 1 to 9, comprising an ejection unit adapted to push the reinforcing element (12) outside the shaping area (42).

11. Manipulating tool according to any of claims 1 to 10, comprising a heating device for maintaining the temperature of the shaping area (42) and of the fibrous insert (20) and/or heating the shaping area (42) and the fibrous insert (20).

12. Assembly comprising a manipulating tool (40) according to any of claims 1 to 11 and a first part (28) of an injection mold (26), the manipulating tool being adapted to apply the shaping area (42) against an inner wall (32) of the first part (28), the inner wall having the shape of a side of the plastic material part to be produced.

13. Assembly according to claim 12, wherein each mobile independent element (102) is adapted to move in translation perpendicularly to a first face (41) on which the shaping area (42) is arranged, such that the shaping area (42) is substantially complementary to the inner wall (32) of the first part (28) and that the distance between a free end of the mobile independent elements (102) and the first face (41) can be varied, the mobile independent elements (102) being adapted to press the reinforcing element (12) against the inner wall (32) of the first part (28).

14. Assembly according to any of claims 12 or 13, wherein the mobile independent elements (102) are equipped with contact elements, the contact elements being free in rotation so as to adapt their orientation to the inner wall (32) against which they are pressed.

15. Method for producing a plastic material part (10), comprising at least a reinforcing element (12) made of at least one fibrous insert (20) made of a composite material, using an injection mold (26) comprising a first part (28) and a second part (30) defining between them a molding cavity (38) having the shape of the plastic material part (10) to be produced, said method comprising the steps of:
- transporting and placing the reinforcing element (12) onto the first part (28) of the injection mold (26) using a manipulating tool (40),
- shaping the fibrous insert (20) into the reinforcing element (12),
- injecting a plastic material into the mold (26) such that the reinforcing element (12) is overmolded by the plastic material and the plastic material part (10) is produced,
wherein the manipulating tool (40) comprises at least one shaping area (42) arranged to receive and hold the fibrous insert, the shaping area (42) comprising a forming system (100) made of mobile independent elements (102), the forming system (100) being able to impart the shape of one side of the reinforcing element to the fibrous insert,
the fibrous insert (20) being placed in said shaping area (42) during the transportation of the fibrous insert (20) to the first part (28) of the mold (26) and being shaped into the reinforcing element (12) by said shaping area (42) and said first part of the mold (28) when said insert (20) is transported or/and is placed onto the first part (28) of the injection mold (26), **characterized in that** the manipulating tool comprises a gripping area (45) arranged on a second face (43) orthogonal to a first face (41) on which the shaping area (42) is arranged, the gripping area (45) being adapted to maintain at least one insert (20).

16. Method according to claim 15, comprising a step of moving the mobile independent elements (102) relative to each other to define the shape of the shaping area (42).

## Patentansprüche

1. Manipulationswerkzeug (40) zum Herstellen eines Kunststoffmaterialteils, das wenigstens ein Verstärkungselement (12) aufweist, das aus wenigstens einem Fasereinsatz (20) gemacht ist, der aus einem Verbundmaterial gemacht ist, wobei das Manipulationswerkzeug aufweist einen Formgebungsbereich (42), der angeordnet ist, um den Fasereinsatz aufzunehmen und zu halten, wobei der Formgebungsbereich aufweist ein Formungssystem (100), das aus bewegbaren unabhängigen Elementen (102) gemacht ist, wobei das Formungssystem (100) imstande ist, die Form von einer Seite des Verstärkungselements an den Fasereinsatz zu vermitteln, **dadurch gekennzeichnet, dass** das Manipulationswerkzeug aufweist einen Greifbereich (45), der an einer zweiten Fläche (43) angeordnet ist, die orthogonal zu einer ersten Fläche (41) ist, an welcher der Formgebungsbereich (42) angeordnet ist, wobei der Greifbereich (45) angepasst ist, um wenigstens einen Einsatz (20) zu halten.

2. Manipulationswerkzeug gemäß Anspruch 1, wobei die mobilen unabhängigen Elemente (102) mit Kontaktelementen (104, 106, 107) ausgestattet sind, die vorgesehen sind, um gegen den Einsatz angelegt zu werden.

3. Manipulationswerkzeug gemäß Anspruch 2, wobei die Kontaktelemente (104, 106, 107) angepasst sind, um sich mit den bewegbaren unabhängigen Elementen (102) drehzubewegen.

4. Manipulationswerkzeug gemäß Anspruch 2 oder 3, wobei die Kontaktelemente (104, 106, 107) Rollen (104), Gegenformen (106) und/oder Druckelemente (107) sind.

5. Manipulationswerkzeug gemäß Anspruch 2 oder 3, wobei die Kontaktelemente (104, 106, 107) Gegenformen (106) aufweisen, wobei die Gegenformen (106) ein Gitter sind.

6. Manipulationswerkzeug gemäß irgendeinem der Ansprüche 1 bis 5, wobei die bewegbaren unabhängigen Elemente (102) angepasst sind, um sich senkrecht zu einer ersten Fläche (41) translationszubewegen, an welcher der Formgebungsbereich angeordnet ist, sodass die Distanz zwischen einem freien Ende der bewegbaren unabhängigen Elemente (102) und der ersten Fläche (41) variiert werden kann.

7. Manipulationswerkzeug gemäß irgendeinem der Ansprüche 1 bis 6, wobei die bewegbaren unabhängigen Elemente (102) angepasst sind, um sich mit der ersten Fläche (41) drehzubewegen, sodass die Orientierung zwischen einem freien Ende der bewegbaren unabhängigen Elemente (102) und der ersten Fläche (41) variiert werden kann.

8. Manipulationswerkzeug gemäß irgendeinem der Ansprüche 1 bis 7, aufweisend Greifer (108), die angepasst sind, um einen Einsatz an dem Formgebungsbereich (42) zu halten.

9. Manipulationswerkzeug gemäß irgendeinem der Ansprüche 1 bis 8, aufweisend eine Formreferenz (122), wobei die Formreferenz (122) ein vorstehendes Teil ist, das angepasst ist, um mit einem korrespondieren Eindruck an der Form zusammenzupassen, sodass das Manipulationswerkzeug (40) angepasst ist, um bezüglich der Form präzise positioniert zu sein.

10. Manipulationswerkzeug gemäß irgendeinem der Ansprüche 1 bis 9, aufweisend eine Auswerfeinheit, die angepasst ist, um das Verstärkungselement (12) aus dem Formbereich (42) zu drücken.

11. Manipulationswerkzeug gemäß irgendeinem der Ansprüche 1 bis 10, aufweisend eine Heizvorrichtung zum Halten der Temperatur des Formbereichs (42) und des Fasereinsatzes (20) und/oder Beheizen des Formbereichs (42) und des Fasereinsatzes (20) .

12. Einrichtung mit einem Manipulationswerkzeug (40) gemäß irgendeinem der Ansprüche 1 bis 11 und einem ersten Teil (28) einer Einspritzform (26), wobei das Manipulationswerkzeug angepasst ist, um den Formgebungsbereich (42) gegen eine Innenwand (32) des ersten Teils (28) anzulegen, wobei die Innenwand die Form einer Seite des herzustellenden Kunststoffmaterialteils hat.

13. Einrichtung gemäß Anspruch 12, wobei jedes bewegbare unabhängige Element (102) angepasst ist, um sich senkrecht zu einer ersten Fläche (41) translationszubewegen, an welcher der Formgebungsbereich (42) angeordnet ist, so dass der Formgebungsbereich (42) im Wesentlichen komplementär zu der Innenwand (32) des ersten Teils (28) ist und dass die Distanz zwischen einem freien Ende der bewegbaren unabhängigen Elemente (102) und der ersten Fläche (41) variiert werden kann, wobei die bewegbaren unabhängigen Elemente (102) angepasst sind, um das Verstärkungselement (12) gegen die Innenwand (32) des ersten Teils (28) zu pressen.

14. Einrichtung gemäß irgendeinem der Ansprüche 12 oder 13, wobei die bewegbaren unabhängigen Elemente (102) mit Kontaktelementen ausgestattet sind, wobei die Kontaktelemente freidrehend sind, um ihre Orientierung zu der Innenwand (32) anzupassen, gegen welche sie gepresst sind.

15. Verfahren zum Herstellen eines Kunststoffmaterialteils (10), das wenigstens ein Verstärkungselement (12) aufweist, das aus wenigstens einem Fasereinsatz (20) gemacht ist, der aus einem Verbundmaterial gemacht ist, verwendend eine Einspritzform (26), die ein erstes Teil (28) und ein zweites Teil (30) aufweist, die zwischen sich eine Formkavität (38) definieren, die die Form des herzustellenden Kunststoffmaterialteils (10) hat, wobei das Verfahren die Schritte aufweist:
- Transportieren und Platzieren des Verstärkungselements (12) an den/an dem ersten Teil (28) der Einspritzform (26) unter Verwenden eines Manipulationswerkzeugs (40),
- Formen des Fasereinsatzes (20) in das Verstärkungselement (12),
- Einspritzen eines Kunststoffmaterials in die Form (26), sodass das Verstärkungselement (12) von dem Kunststoffmaterial überformt wird und das Kunststoffmaterialteil (10) hergestellt wird,
- wobei das Manipulationswerkzeug (40) aufweist wenigstens einen Formgebungsbereich (42), der angeordnet ist, um den Fasereinsatz aufzunehmen und zu halten, wobei der Formgebungsbereich (42) aufweist ein Formungssystem (100), das aus bewegbaren unabhängigen Elementen (102) gemacht ist, wobei das Formungssystem (100) imstande ist, die Form von einer Seite des Verstärkungselements an den Fasereinsatz zu vermitteln,
wobei der Fasereinsatz (20) während des Transports des Fasereinsatzes (20) zu dem ersten Teil (28) der Form (26) in dem Formgebungsbereich (42) platziert ist und in das Verstärkungselement (12) geformt ist durch den Formgebungsbereich (42) und den ersten Teil der Form (28), wenn der Einsatz (20) an den/an dem ersten Teil (28) der Einspritzform (26) transportiert ist und/oder platziert ist, **dadurch gekennzeichnet, dass** das Manipulationswerkzeug einen Greifbereich (45) aufweist, der an einer zweiten Fläche (43) angeordnet ist, die orthogonal zu einer ersten Fläche (41) ist, an welcher der Formgebungsbereich (42) angeordnet ist,
wobei der Greifbereich (45) angepasst ist, um wenigstens einen Einsatz (20) zu halten.

16. Verfahren gemäß Anspruch 15, aufweisend einen Schritt des Bewegens der bewegbaren unabhängigen Elemente (102) relativ zueinander, um die Form des Formgebungsbereichs (42) zu definieren.

## Revendications

1. Outil manipulateur (40) pour produire une pièce en matière plastique comprenant au moins un élément de renforcement (12) réalisé avec au moins un insert fibreux (20) réalisé avec un matériau composite, l'outil manipulateur comprenant une zone de façonnage (42) agencée pour recevoir et maintenir l'insert fibreux, la zone de façonnage comprenant un système de formage (100) réalisé avec des éléments indépendants mobiles (102), le système de formage (100) pouvant communiquer la forme d'un côté de l'élément de renforcement à l'insert fibreux,
**caractérisé en ce que** l'outil manipulateur comprend une zone de préhension (45) agencée sur une seconde face (43) orthogonale à une première face (41) sur laquelle la zone de façonnage (42) est agencée, la zone de préhension (45) étant adaptée pour maintenir au moins un insert (20).

2. Outil manipulateur selon la revendication 1, dans lequel les éléments indépendants mobiles (102) sont équipés avec des éléments de contact (104, 106, 107) prévus pour être appliqués contre l'insert.

3. Outil manipulateur selon la revendication 2, dans lequel les éléments de contact (104, 106, 107) sont adaptés pour se déplacer en rotation avec les éléments indépendants mobiles (102).

4. Outil manipulateur selon la revendication 2 ou 3, dans lequel les éléments de contact (104, 106, 107) sont des rouleaux (104), des contre-formes (106) et/ou des éléments de pression (107).

5. Outil manipulateur selon la revendication 2 ou 3, dans lequel les éléments de contact (104, 106, 107) comprennent des contre-formes (106) les contre-formes (106) étant une grille.

6. Outil manipulateur selon l'une quelconque des revendications 1 à 5, dans lequel les éléments indépendants mobiles (102) sont adaptés pour se déplacer en translation, perpendiculairement à une première face (41) sur laquelle la zone de façonnage est agencée, de sorte que la distance entre une extrémité libre des éléments indépendants mobiles (102) et la première face (41), peut être modifiée.

7. Outil manipulateur selon l'une quelconque des revendications 1 à 6, dans lequel les éléments indépendants mobiles (102) sont adaptés pour se déplacer en rotation avec la première face (41), de sorte que l'orientation entre une extrémité libre des éléments indépendants mobiles (102) et la première face (41), peut être modifiée.

8. Outil manipulateur selon l'une quelconque des revendications 1 à 7, comprenant des pinces (108) adaptées pour maintenir un insert sur la zone de façonnage (42).

9. Outil manipulateur selon l'une quelconque des revendications 1 à 8, comprenant une référence de moule (122), la référence de moule (122) étant une partie en saillie adaptée pour se monter avec une empreinte correspondante sur un moule, de sorte que l'outil manipulateur (40) est adapté pour être précisément positionné en regard du moule.

10. Outil manipulateur selon l'une quelconque des revendications 1 à 9, comprenant une unité d'éjection adaptée pour pousser l'élément de renforcement (12) à l'extérieur de la zone de façonnage (42).

11. Outil manipulateur selon l'une quelconque des revendications 1 à 10, comprenant un dispositif de chauffage pour maintenir la température de la zone de façonnage (42) et de l'insert fibreux (20) et/ou chauffer la zone de façonnage (42) et l'insert fibreux (20).

12. Ensemble comprenant un outil manipulateur (40) selon l'une quelconque des revendications 1 à 11 et une première partie (28) d'un moule d'injection (26), l'outil manipulateur étant adapté pour appliquer la zone de façonnage (42) contre une paroi interne (32) de la première partie (28), la paroi interne ayant la forme d'un côté de la pièce en matière plastique à produire.

13. Ensemble selon la revendication 12, dans lequel chaque élément indépendant mobile (102) est adapté pour se déplacer en translation perpendiculairement à une première face (41) sur laquelle la zone de façonnage (42) est agencée, de sorte que la zone de façonnage (42) est sensiblement complémentaire de la paroi interne (32) de la première partie (28) et de sorte que la distance entre une extrémité libre des éléments indépendants mobiles (102) et la première face (41) peut être modifiée, les éléments indépendants mobiles (102) étant adaptés pour comprimer l'élément de renforcement (12) contre la paroi interne (32) de la première partie (28).

14. Ensemble selon l'une quelconque des revendications 12 ou 13, dans lequel les éléments indépendants mobiles (102) sont équipés d'éléments de contact, les éléments de contact étant libres en rotation afin d'adapter leur orientation à la paroi interne (32) contre laquelle ils sont comprimés.

15. Procédé pour produire une pièce en matière plastique (10), comprenant au moins un élément de renforcement (12) réalisé avec au moins un insert fibreux (20) réalisé avec un matériau composite, à l'aide d'un moule d'injection (26) comprenant une première partie (28) et une seconde partie (30) définissant entre elles une cavité de moulage (38) ayant la forme de la pièce en matière plastique (10) à produire, ledit procédé comprenant les étapes consistant à :
transporter et placer l'élément de renforcement (12) sur la première partie (28) du moule à injection (26) à l'aide d'un outil manipulateur (40),
façonner l'insert fibreux (20) en élément de renforcement (12),
injecter une matière plastique dans le moule (26) de sorte que l'élément de renforcement (12) est surmoulé par la matière plastique et la pièce en matière plastique (10) est produite,
dans lequel l'outil manipulateur (40) comprend au moins une zone de façonnage (42) agencée pour recevoir et maintenir l'insert fibreux, la zone de façonnage (42) comprenant un système de formage (100) réalisé avec des éléments indépendants mobiles (102), le système de formage (100) pouvant communiquer la forme d'un côté de l'élément de renforcement à l'insert fibreux,
l'insert fibreux (20) étant placé dans ladite zone de façonnage (42) pendant le transport de l'insert fibreux (20) jusqu'à la première partie (28) du moule (26) et étant formé par l'élément de renforcement (12) par ladite zone de façonnage (42) et ladite première partie du moule (28), lorsque ledit insert (20) est transporté et/ou est placé sur la première partie (28) du moule d'injection (26), **caractérisé en ce que** l'outil manipulateur comprend une zone de préhension (45) agencée sur une seconde face (43) orthogonale à une première face (41) sur laquelle la zone de façonnage (42) est agencée, la zone de préhension (45) étant adaptée pour maintenir au moins un insert (20).

16. Procédé selon la revendication 15, comprenant une étape consistant à déplacer les éléments indépendants mobiles (102) les uns par rapport aux autres afin de définir la forme de la zone de façonnage (42).
